# EUROPÄISCHE PATENTSCHRIFT

(11) **EP 1 884 409 B1**
(45) Veröffentlichungstag und Bekanntmachung des Hinweises auf die Patenterteilung: **13.04.2011**
(21) Anmeldenummer: 07012642.0
(22) Anmeldetag: 28.06.2007
(51) Int. Cl.: B60R 5/04, B60R 21/06

(54) **Schutzvorrichtung für einen Laderaum**
Protective device for a loading space
Dispositif de sécurité pour un espace de chargement

(30) Priorität: 27.07.2006 DE 102006034635
(43) Veröffentlichungstag der Anmeldung: 06.02.2008
(73) Patentinhaber: Dr. Ing. h.c. F. Porsche AG, 70435 Stuttgart (DE)
(72) Erfinder: Luik, Klaus, 75417 Muehlacker (DE)

(56) Entgegenhaltungen:
- EP-A- 1 524 153
- DE-A1- 10 323 605
- JP-A- 1 204 836

## Beschreibung

Die vorliegende Erfindung betrifft eine Schutzvorrichtung für einen Laderaum eines Kraftfahrzeugs mit wenigstens einem Flächengebilde gemäß dem Oberbegriff des Anspruchs 1.

Aus der gattungsbildenden DE 103 23 605 A1 ist eine Schutzvorrichtung für einen Laderaum eines Kraftfahrzeugs mit wenigstens einem Flächengebilde bekannt, das alternativ in eine etwa vertikale Schutzposition oder in eine etwa horizontale Schutzposition überführbar ist. Dabei sind Mittel zum Verändern der Lichtdurchlässigkeit des Flächengebildes vorgesehen, die mit Steuermitteln gekoppelt sind, die in Abhängigkeit von einer Verlagerung des Flächengebildes zwischen den beiden Schutzpositionen die Mittel zum Verändern der Lichtdurchlässigkeit ansteuern. Hierdurch ist es möglich, ein einzelnes Flächengebilde sowohl als horizontales als auch als vertikales Schutzgebilde einzusetzen und dadurch sowohl eine Ladeabdeckungsfunktion als auch eine Trennvorrichtung zwischen Laderaum und Fahrgastraum zu erzielen, wobei das Flächengebilde in seiner horizontalen Schutzposition einen Sicht- oder Blickschutz für unterhalb angeordnetes Ladegut bildet, während es in seiner vertikalen Schutzposition einen Blick des Fahrers nach hinten, insbesondere durch einen Rückspiegel, nicht behindert.

Nachteilig ist bei der bekannten Schutzvorrichtung, dass diese aufwändig und teuer ist und je nach Ausführungsform aus mehreren einzelnen, miteinander verbundenen Lamellen bzw. Schichten besteht, welche dem Flächengebilde eine nicht zu unterschätzende dritte Dimension, d.h. Dicke verleihen.

Die vorliegende Erfindung beschäftigt sich mit dem Problem, für eine Schutzeinrichtung der gattungsgemäßen Art, eine verbesserte Ausführungsform anzugeben, welche zum einen mit einfachen Mitteln variable Schutzfunktionen ermöglicht und zum andere eine lediglich geringe Dicke aufweist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein Flächengebilde einer Schutzvorrichtung für einen Laderaum eines Kraftfahrzeugs als dreidimensionales textiles Zweilagen-Abstandsflächengebilde auszubilden. Das Flächengebilde ist dabei vorzugsweise ausziehbar an einer rückwärtigen Seite einer Rückenlehne in einem Gehäuse angeordnet und kann alternativ in eine vertikale Schutzposition oder in eine etwa horizontale Schutzposition überführt werden, wobei das Flächengebilde in seiner horizontalen Schutzposition zumindest eine reduzierte, bestenfalls keine, und in seiner vertikalen Schutzposition eine erhöhte Lichtdurchlässigkeit aufweist. Die Lichtdurchlässigkeit kann dabei in der horizontalen Schutzposition soweit reduziert werden, dass das Flächengebilde intransparent und dadurch blickdicht wird. Dadurch sind unterhalb des Flächengebildes angeordnete Gepäckstücke blickdicht und von außen nicht sichtbar verstaut. In seiner vertikalen Schutzposition kann die erhöhte Lichtdurchlässigkeit bis hin zu einer nahezu vollständigen Transparenz führen, so dass bei sich in vertikaler Schutzposition befindlicher Schutzvorrichtung ein Fahrgastraum zuverlässig durch das Flächengebilde vom dahinter angeordneten Gepäckraum getrennt wird, gleichzeitig aber ein Zurückschauen des Fahrers, beispielsweise durch einen Rückspiegel, nicht behindert wird.

Erfindungsgemäß weist das Flächengebilde zwei parallele Schichten in Form von textilen Flächenstrukturabschnitten auf sowie sogenannte Abstandshalter, z.B. Polfäden, welche die beiden Schichten zuverlässig miteinander verbinden. Die beiden Flächenstrukturabschnitte können sowohl als Kett- und Schussfäden aufweisende Webabschnitte oder als Wirkware ausgebildet sein, in welche die im wesentlichen senkrecht dazu angeordneten Abstandshalter, z.B. Polfäden eingearbeitet sind. Die Abstandshalter erlauben eine relative Parallelverschiebung der beiden Flächenstrukturabschnitte zueinander, wodurch in beiden Flächenstrukturabschnitten angeordnete Öffnungen entweder fluchten oder nicht deckungsgleich gegeneinander verschoben sind. Im Fall des Fluchtens der in den beiden Flächenstrukturabschnitten vorhandenen Öffnungen wird das Flächengebilde transparent, während es bei nicht fluchtenden, d.h. nicht deckungsgleichen Öffnungen der beiden Flächenstrukturabschnitte intransparent, d.h. blickdicht wird. Dies ermöglicht ein einfaches Ändern der Lichtdurchlässigkeitsverhältnisse im Flächengebilde, so dass dieses durch eine einfache Relativverschiebung der beiden Flächenstrukturabschnitte parallel zueinander von einem blickdichten in einen transparenten Zustand überführt werden kann und umgekehrt. Gleichzeitig weist ein derartig ausgebildetes Abstandsflächengebilde eine sehr geringe Dicke, insbesondere im gepressten Zustand auf, wodurch dieses problemlos faltbar, aufrollbar oder stauchbar bleibt.

Erfindungsgemäß sind die Flächenstrukturabschnitte zumindest abschnittsweise durchbrochen, insbesondere durchsichtig, ausgebildet, bspw. zumindest teilweise transparent. Eine Perforation ist dabei eine Möglichkeit von Durchgangsöffnungen, welche, wie im vorigen Absatz erwähnt, bei fluchtender Anordnung zueinander die Transparenz des Flächengebildes bewirken, während sie bei nicht fluchtender Anordnung zueinander das Flächengebilde blickdicht machen. Da das Flächengebilde in seiner vertikalen Schutzposition deutlich kürzer ausgezogen werden muss als für seine im wesentlichen horizontale Schutzposition, ist denkbar, dass eine derartige Durchsichtsmöglichkeit nur über die Höhe der vertikalen Schutzposition angebracht ist, da eine Transparenz des Flächengebildes nur in diesem Bereich erwünscht ist. Wird das Flächengebilde zum Abdecken des Gepäckraumes in seine horizontale Schutzposition überführt, so muss es deutlich weiter ausgezogen werden, wobei das Flächengebilde in diesem zusätzlichen Auszugsbereich nicht transparent ausgeführt ist, da dieser Bereich nur in der horizontalen Schutzposition aus einem das Flächengebilde aufnehmenden Gehäuse austritt und auf jeden Fall ein Blick auf unter dem Flächengebilde gelagerte Gepäckgegenstände vermieden werden soll.

Bei einer vorteilhaften Ausführungsform der erfindungsgemäßen Lösung ist der erste Flächenstrukturabschnitt aus hellem, reflektierendem Material ausgebildet, während der zweite Flächenstrukturabschnitt aus dunklem Material ausgebildet ist. Ähnlich, wie bei in Fensteröffnungen aufgespannten Fliegengittern, ist auch bei der erfindungsgemäßen Schutzvorrichtung zu beobachten, dass dunkle Materialen die Transparenz erhöhen und helle, insbesondere reflektierende Materialien, die Transparenz beeinträchtigen. Dies gilt insbesondere für helle Hintergründe. Bei sich in vertikaler Schutzposition befindlichem Flächengebilde sieht der Fahrer durch das Flächengebilde durch einen relativ hellen Hintergrund, während bei sich in seiner horizontalen Schutzposition befindlichem Flächengebilde ein Hintergrund durch den dunklen Laderaum gebildet wird. Demzufolge sind Flächengebilde aus dunklem Material besonders geeignet.

Bei einer weiteren vorteilhaften Ausführungsform der erfindungsgemäßen Lösung beträgt ein orthogonaler Abstand zwischen den beiden Flächenstrukturabschnitten wenige Millimeter und hängt insbesondere von der Größe der Durchbrüche ab. Ein Beispielsmaß sind ca. 1,5 mm bis 2,5 mm. Die Abstandshalter sind flexibel und halten dadurch die Dicke des Flächengebildes im Nichtgebrauchszustand relativ gering, so dass dieses problemlos aufgerollt, gefaltet oder gestaucht werden kann, wodurch es besser zwischen einer Gebrauchs- und einer Nichtgebrauchsposition verstellbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Darstellung einer Schutzvorrichtung mit einem sich in vertikaler Schutzposition befindlichem Flächengebilde,
- Fig. 2: eine Darstellung wie in Fig. 1, jedoch bei sich in horizontalen Schutzpositionen befindlichem Flächengebilde,
- Fig. 3a: Flächengebilde in transparentem Zustand, d.h. mit deckungsgleichen Flächenstrukturabschnitten,
- Fig. 3b: eine Darstellung wie in Fig. 3a, jedoch in intransparentem Zustand,
- Fig. 4: eine geschnittene Darstellung einer erfindungsgemäßen Schutzvorrichtung, einerseits in vertikaler und andererseits in horizontaler Schutzposition.

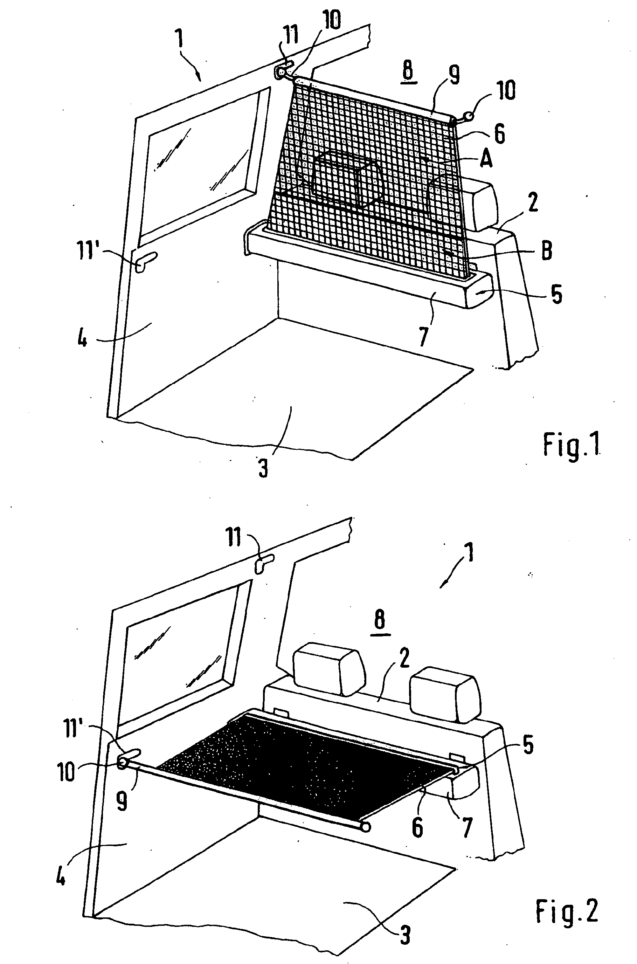

Entsprechend Fig. 1 weist ein teilweise dargestelltes Kraftfahrzeug 1 in Fahrtrichtung gesehen hinter einer Rücksitzlehne 2, einen Laderaum 3 auf, in welchem nicht dargestelltes Ladegut, beispielsweise Gepäck, transportiert werden kann. Das in den Fig. 1 und 2 gezeigte Kraftfahrzeug 1 ist dabei als Kombi ausgebildet, welcher heckseitig mit einer nicht gezeigten Heckklappe ausgerüstet ist. Der Laderaum 3 ist im dargestellten Zustand nach vorne durch die Rücksitzlehne 2 und nach hinten durch die Heckklappe begrenzt. Zu den Seiten hin erfolgt eine Begrenzung des Laderaums 3 durch jeweils eine Fahrzeugsseitenwand 4, wovon gemäß den Fig. 1 und 2 lediglich die linke Fahrzeugseitenwand 4 dargestellt ist.

Zur Sicherung des Laderaums 3 ist eine Schutzvorrichtung 5 vorgesehen, welche im wesentlichen in Fahrzeugquerrichtung an einer dem Laderaum 3 zugewandten Seite der Rücksitzlehne 2 angeordnet ist und ein Flächengebilde 6 sowie ein Gehäuse 7 aufweist. Das Flächengebilde 6 ist flexibel, d.h. aufrollbar, stauchbar oder faltbar und beispielsweise in aufgerolltem Zustand im Gehäuse 7 verstaubar. Dadurch ist das Flächengebilde 6 in dessen Nichtgebrauchsstellung platzsparend und geschützt im Gehäuse 7 untergebracht. Um ein einfaches Ausziehen und wieder Einfahren des Flächengebildes 6 in das Gehäuse 7 zu ermöglichen, kann das Flächengebilde 6 auf einer nicht gezeigten Wickelwelle im Gehäuse 7 aufgerollt werden, welche vorzugsweise durch eine ebenfalls nicht gezeigte Rückholanordnung, beispielsweise eine Rückholfeder, in Aufwickelrichtung des Flächengebildes 6 kraftbeaufschlagt ist. Die Schutzvorrichtung 5 dient zur Sicherung des Laderaumes 3 bzw. zur Sicherung von im Laderaum 3 angeordnetem Ladegut, beispielsweise Gepäck.

Darüber hinaus kann das Flächengebilde 6 alternativ in eine vertikale Schutzposition verstellt werden (vgl. Fig. 1) oder in eine horizontale Schutzposition (vgl. Fig. 2), wobei es in seiner vertikalen Schutzposition eine erhöhte Lichtdurchlässigkeit aufweist und in seiner horizontalen Schutzposition eine reduzierte Lichtdurchlässigkeit aufweist. Gemäß Fig. 1 ist das Flächengebilde 6 in seiner vertikalen Schutzposition dargestellt, in welcher es den Laderaum 3 von einem in Fahrtrichtung davor gelegenen Fahrgastraum 8 trennt. In dieser vertikalen Schutzposition sorgt die erhöhte Lichtdurchlässigkeit, welche das Flächengebilde 6 günstigstenfalls transparent erscheinen lässt, für eine unbehinderte Sicht des Fahrers nach hinten. Dies insbesondere wichtig, um einen rückwärtigen Verkehr durch den Rückspiegel beobachten zu können.

Zur Fixierung des Flächengebildes 6 in seiner vertikalen Schutzposition weist dieses an seinem in Auszugsrichtung vorderen Stirnendbereich eine Stange 9 auf, welche längsendseitig Halteelemente 10 besitzt, die in entsprechende, fahrzeugseitige Aufnahmen 11 eingreifen. Zur Fixierung des Flächengebildes 6 in seiner horizontalen Schutzposition (vgl. Fig. 2) greift die Stange mit ihren längsendseitig angeordneten Halteelementen 10 jeweils in eine fahrzeugseitig angeordnete Aufnahme 11' ein.

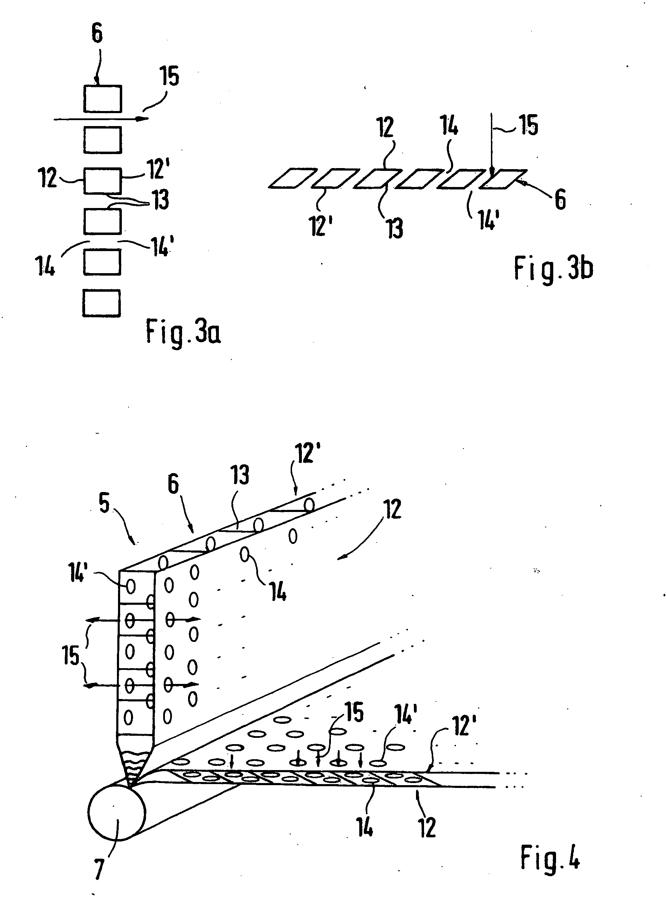

Wie aus den Darstellungen gemäß den Fig. 1 und 2 erkennbar ist, ist das Flächengebilde 6 in seiner vertikalen Schutzposition nahezu transparent und ermöglicht dadurch eine ungehinderte Sicht eines Fahrzeuginsassen nach hinten, während es in seiner horizontalen Schutzposition gemäß Fig. 2 nahezu intransparent ist und dadurch einen Blick auf unterhalb des Flächengebildes 6 verstautes Ladegut verhindert. Die Änderung der Lichtdurchlässigkeit zwischen der vertikalen und der horizontalen Schutzposition wird dadurch erreicht, dass das Flächengebilde 6 als Abstandsgebilde, beispielsweise als Polgewebe, ausgebildet ist und zwei parallel, textile Flächenstrukturabschnitte 12, 12' (vgl. Fig. 3 und 4) und diese verbindende Abstandshalter 13, z.B. Polfäden, aufweist. Ein orthogonaler Abstand zwischen den beiden Flächenstrukturabschnitten 12, 12' beträgt dabei wenige Millimeter, insbesondere ca. 1,5 mm bis 2,5 mm, so dass das Flächengebilde 6 insgesamt eine sehr geringe Dicke aufweist, welche ein problemloses Aufrollen, Falten oder Stauchen erlaubt.

Die Lichtdurchlässigkeit des Flächengebildes 6 wird erfindungsgemäß dadurch erreicht, dass beide Flächenstrukturabschnitte 12, 12' zumindest abschnittsweise durchbrochen, insbesondere perforiert, sind und/oder Durchbruchsöffnungen 14, 14' aufweisen, wobei in transparentem Zustand die Durchbrüche beider Flächenstrukturabschnitte 12, 12' deckungsgleich sind (vgl. Fig. 3a), während sie bei nichttransparentem Flächengebilde 6, wie in Fig. 3b gezeigt, nicht deckungsgleich sind. Fig. 3a zeigt das Flächengebilde 6 in seiner vertikalen Schutzposition, bei welcher die jeweilige Durchbruchsöffnungen 14, 14' der beiden Flächenstrukturabschnitfe 12, 12' fluchtend zueinander angeordnet sind, so dass ein Lichtstrahl 15 das Flächengebilde 6 ungehindert durchdringen kann. Dies ist bei sich in horizontaler Schutzposition befindlichem Flächengebilde 6, wie in Fig. 3b gezeigt, nicht möglich, da der Lichtstrahl 15 das Flächengebilde 6 nicht durchdringen kann.

Wie oben erwähnt, sind die Durchbrüche an beiden Flächenstrukturabschnitten 12, 12' zumindest abschnittsweise angeordnet, so dass denkbar ist, dass die Durchbrüche 14 lediglich in Abschnitt A vorgesehen wird, während ein Abschnitt B (vgl. Fig. 1) gänzlich ohne Durchbrüche ausgeführt wird. Eine Längserstreckung I des Abschnitts A in Ausziehrichtung des Flächengebildes 6 ist dabei vorzugsweise so lang, wie ein Abstand zwischen einer Oberkante der Rücksitzlehne 2 und einem Himmel des Kraftfahrzeugs 1. Ebenso ist denkbar, dass das Flächengebilde 6 Kett- und/oder Schussfäden und/oder Abstandshalter 13 aus Garn aufweist.

Generell können sowohl einer als auch beide Flächenstrukturabschnitte 12, 12' aus gleichem oder unterschiedlich farbigen Material ausgebildet sein, so dass denkbar ist, dass der erste Flächenstrukturabschnitt 12 aus hellem, reflektierenden Material ausgebildeten ist, während der zweite Flächenstrukturabschnitt 12' aus dunklem Material ausgebildet ist.

Gemäß der Fig. 4 ist das Flächengebilde 6 in dessen vertikaler und horizontaler Schutzposition gezeigt, so dass die Wirkungsweise des als Abstandsgebilde ausgebildeten Flächengebildes 6 verdeutlicht werden kann. In seiner vertikalen Schutzposition sind die Durchbruchsöffnungen 14, 14' der beiden Flächenabschnitte 12, 12' denkungsgleich bzw. fluchtend, so dass ein Lichtstrahl 15 das Flächengebilde 6 nahezu ungehindert durchdringen kann und dieses transparent erscheinen lässt. In seiner horizontalen Schutzposition hingegen sind die Durchbruchsöffnungen 14, 14' der beiden Flächenstrukturabschnitte 12, 12' nicht deckungsgleich, so dass Strahlen 15 das Flächengebilde 6 nur schwer durchdringen können und dieses dadurch blickdicht erscheinen lassen.

## Patentansprüche

1. Schutzvorrichtung (5) für einen Laderaum (3) eines Kraftfahrzeuges (1) mit wenigstens einem Flächengebilde (6), das alternativ in eine vertikale Schutzposition oder in eine etwa horizontale Schutzposition überführbar ist, wobei das Flächengebilde (6) in seiner horizontalen Schutzposition eine reduzierte und in seiner vertikalen Schutzposition eine erhöhte Lichtdurchlässigkeit aufweist, **dadurch gekennzeichnet, dass** das Flächengebilde (6) als Abstandsgebilde ausgebildet ist und zwei parallele, textile Flächenstrukturabschnitte (12, 12') und diese verbindende Abstandshalter (13) aufweist, wobei die Flächenstrukturabschnitte (12, 12') zumindest abschnittsweise durchbrochen sind und das Abstandsgebilde so ausgebildet ist, dass die jeweiligen Durchbrüche der beiden Flächenstrukturabschnitte (12, 12') in vertikaler Stellung deckungsgleich sind, während sie in horizontaler Stellung nicht deckungsgleich sind.

2. Schutzvorrichtung nach Anspruch 1, **dadurch gekennzeichnet, dass** der erste Flächenstrukturabschnitt (12) aus hellem, reflektierenden Material ausgebildet ist, während der zweite Flächenstrukturabschnitt (12') aus dunklem Material ausgebildet ist.

3. Schutzvorrichtung nach Anspruch 1, **dadurch gekennzeichnet, dass** die Schutzvorrichtung (5) ein Gehäuse (7) aufweist, in welches das Flächengebilde (6) in dessen Nichtgebrauchstellung aufroll-, stauch- und/oder faltbar ist.

4. Schutzvorrichtung nach einem der Ansprüche 1 bis 3, **dadurch gekennzeichnet, dass** ein orthogonaler Abstand zwischen den beiden Flächenstrukturabschnitten (12, 12') ca. 1,5 mm bis 2,5 mm beträgt.

5. Schutzvorrichtung nach einem der Ansprüche 1 bis 4, **dadurch gekennzeichnet, dass** das Flächengebilde (6) Kett- und/oder Schussfäden und/oder Abstandshalter (13) aus Garn aufweist.

## Claims

1. Protective device (5) for a loading space (3) of a motor vehicle (1), with at least one sheetlike structure (6) which can be transferred alternatively into a vertical protective position or into an approximately horizontal protective position, the sheetlike structure (6) having reduced light permeability in its horizontal protective position and increased light permeability in its vertical protective position, **characterized in that** the sheetlike structure (6) is designed as a spacer structure and has two parallel, textile surface structure sections (12, 12') and spacers (13) connecting them, the surface structure sections (12, 12') being pierced at least in some sections and the spacer structure being designed in such a manner that the respective apertures of the two surface structure sections (12, 12') are congruent in the vertical position while they are not congruent in the horizontal position.

2. Protective device according to Claim 1, **characterized in that** the first surface structure section (12) is formed from light, reflective material while the second surface structure section (12') is formed from dark material.

3. Protective device according to Claim 1, **characterized in that** the protective device (5) has a housing (7) into which the sheetlike structure (6) can be rolled up, compressed and/or folded in its not-in-use position.

4. Protective device according to one of Claims 1 to 3, **characterized in that** an orthogonal distance between the two surface structure sections (12, 12') is approx. 1.5 mm to 2.5 mm.

5. Protective device according to one of Claims 1 to 4, **characterized in that** the sheetlike structure (6) has warp and/or weft threads and/or spacers (13) made of yarn.

## Revendications

1. Dispositif de protection (5) pour le coffre (3) d'un véhicule automobile (1), qui présente au moins un produit plat (6) qui peut être placé dans une position verticale de protection ou dans une position sensiblement horizontale de protection, le produit plat (6) présentant une transparence réduite dans sa position horizontale de protection et une transparence plus élevée dans sa position verticale de protection, **caractérisé en ce que**
le produit plat (6) est configuré comme produit en deux nappes distantes l'une de l'autre et présente deux parties textiles (12, 12') structurées en surface ainsi que des écarteurs (13) qui les relient,
**en ce qu'**au moins certaines portions des parties (12, 12') structurées en surface sont perforées et
**en ce que** le produit en deux nappes écartées l'une de l'autre est configuré de telle sorte que les perforations des deux parties (12, 12') structurées en surface se recouvrent en position verticale mais ne se recouvrent pas en position horizontale.

2. Dispositif de protection selon la revendication 1, **caractérisé en ce que** la première partie (12) structurée en surface est formée d'un matériau clair réfléchissant tandis que la deuxième partie (12') structurée en surface est formée d'un matériau sombre.

3. Dispositif de protection selon la revendication 1, **caractérisé en ce que** le dispositif de protection (5) présente un boîtier (7) dans lequel le produit plat (6) peut être enroulé, comprimé ou replié dans sa position de non-utilisation.

4. Dispositif de protection selon l'une des revendications 1 à 3, **caractérisé en ce que** la distance orthogonale entre les deux parties (12, 12') structurées en surface est comprise entre environ 1,5 mm et 2,5 mm.

5. Dispositif de protection selon l'une des revendications 1 à 4, **caractérisé en ce que** le produit plat (6) présente des fils de chaîne et/ou des fils de trame et/ou des écarteurs (13) en fil.
